# EUROPEAN PATENT APPLICATION

(11) **EP 2 779 040 A1**
(43) Date of publication of application: **17.09.2014**
(21) Application number: 14159114.9
(22) Date of filing: 12.03.2014
(51) Int. Cl.: G06Q 10/04, G06Q 50/06

(54) **Modeling energy conversion in systems**

(30) Priority: 15.03.2013 US 201313841131
(71) Applicant: Honeywell International Inc., Morristown, NJ 07962-2245 (US)
(72) Inventor: Schindler, Zdenek, Morristown, NJ New Jersey 07962-2245 (US); Parthasarathy, Girija, Morristown, NJ New Jersey 07962-2245 (US); Appireddygari, SambaSiva R., Morristown, NJ New Jersey 07962-2245 (US)
(74) Representative: Houghton, Mark Phillip

(57) **Abstract**

Methods, systems, and computer-readable mediums for modeling energy conversion in systems are described herein. One method includes identifying an external parameter that influences operation of the system, determining a characteristic curve of a component of the system using a value of the identified external parameter, and determining a model of energy conversion in the system using the characteristic curve of the component.

## Description

### Technical Field

The present disclosure relates to methods, computer-readable mediums, and systems for modeling energy conversion in systems.

### Background

Modeling energy conversion in a system can refer to modeling energy conversion in a system using measured data and statistically processed data (e.g., data associated with the components, equipment, and/or properties of the system). For instance, the result of modeling energy conversion in a system can include a model with a set of characteristics that can determine relevant behavior of the system. Determining relevant behavior of the system can be used to, for example, reduce the operational cost of the system by appropriately identifying and selecting equipment and supply sources to meet an energy demand.

Previous approaches for modeling energy conversion in systems however, may be inaccurate (e.g., may not appropriately identify or select resources to meet the energy demand). Accordingly, previous approaches for modeling energy conversion in systems may not effectively reduce the operational costs of the system.

### Brief Description of the Drawings

Figure 1 illustrates a method for modeling energy conversion in a system in accordance with one or more embodiments of the present disclosure.
Figure 2 illustrates a block diagram for allocating resources using a model of energy conversion in a system in accordance with one or more embodiments of the present disclosure.
Figure 3 illustrates an example of a set of energy efficiency curves of a component of a system in accordance with one or more embodiments of the present disclosure.
Figure 4 illustrates a block diagram of an example of a system for modeling energy conversion in a system in accordance with one or more embodiments of the present disclosure.

### Detailed Description

Methods, systems, and computer-readable mediums for modeling energy conversion in systems are described herein. For example, one or more embodiments include identifying an external parameter that influences operation of the system, determining a characteristic curve of a component of the system using a value of the identified external parameter, and determining a model of energy conversion in the system using the characteristic curve of the component.

Models of energy conversion in systems in accordance with one or more embodiments of the present disclosure can factor in the effect of external parameters on the energy efficiency of components (e.g., equipment) of the system. As such, models of energy conversion in systems in accordance with one or more embodiments of the present disclosure may be more accurate than previous approaches. Accordingly, models of energy conversion in systems in accordance with one or more embodiments of the present disclosure can reduce the operational cost of the system further than previous approaches.

A system can include a plurality of interconnected resources (e.g., components). Example systems can include a utility plant (e.g., district heating plants, power stations, combined heat and power systems, and/or combined cooling heat and power system, among other utility plants), and/or multi-unit electric power stations (e.g., parallel operation of steam and gas turbines). For example, a system can include one or more energy conversion subsystems, such as a combined heat and power (CHP) and/or combined cooling heat and power (CCHP) system. An energy conversion subsystem can include a subsystem that converts energy to one or more types of energies (e.g., electricity, heating, and/or cooling).

A CHP system, for instance, can simultaneously generate electricity and heat. Heat generated together with electricity can be used to, for example, drive a steam turbine powered generator and/or for water and/or space heating. As an example, a utility plant can generate heat during electricity generation, and a sub-portion and/or all of the heat can be captured for heating purposes. For example, the captured heat can be used to heat the utility plant, a building close to the utility plant, and/or hot water for district heating.

As an additional example, a CCHP system can simultaneously generate electricity, in addition to heating and cooling, from the combustion of a fuel and/or a solar heat collector. The heat from generating electricity can be used for both heating and cooling. For example, the heat can be used for water and/or space heating (e.g., for heating purposes) using a heat exchanger and/or other heating source. In addition, the heat can be used for cooling and/or by a heating ventilation and cooling (HVAC) system using an absorption chiller.

A model, as used herein, can include predictive modeling of variables of a system based on observed past values of the variables. A model can be formed using parameter estimation applied to a model structure and the observed past values of the variables (e.g., measured data).

A model of energy conversion in a system can include a mathematical function based on an interconnection of resources (e.g., components) in a system and the flow of energy through the resources. A model of energy conversion in a system (e.g., energy conversion model) can be used for allocating resources such that energy conversion in the system is a best solution from a set of alternative solutions. Energy conversion, as used herein, can include a physical process of converting input energy to output energy.

A best solution, as used herein, can be a resource allocation solution that converts energy using components of the system that can meet energy demand (e.g., produce energy output to meet the energy demand) at the lowest cost of the set of alternative solutions (e.g., best in the sense of energy consumption, purchased supply cost, total energy bill, and while respecting constraints on emissions). The best solution can include a tradeoff between energy efficiency and cost of operation. The tradeoff can include sacrificing energy efficiency in favor of cost, and, thus, the best solution may not have the highest efficiency of the set of alternative solutions.

A model of energy conversion in a system can be used to identify equipment and supply sources to meet an identified energy demand at a minimal operating cost as compared to the alternative solutions. For instance, a building and/or plant containing a CCHP system can use a mathematical model (e.g., energy conversion model) of equipment, energy cost, and energy demand to determine how to allocate resources (e.g., components of the system).

Accurately modeling energy conversion in a system can, for example, result in lower cost of operating the system as compared to an inaccurate energy conversion model (e.g., energy conversion model with inaccurate parameters). Models of energy conversion can depend on external parameters that cause ineffective utilization of equipment. An inaccurate energy conversion model, such as a model that does not consider external parameters, can result in higher operating costs as compared to an accurate model.

Modeling energy conversion in a system in accordance with one or more embodiments of the present disclosure may include identifying an external parameter that influences operation of the system to determine an energy conversion model. For instance, modeling energy conversion in a system can include determining a characteristic curve of a component (e.g., machine and/or equipment) of the system using a value of the identified external parameter, and using the determined characteristic curve to model energy conversion in the system. A characteristic curve can be dynamically determined for each component of the system using observed values of one or more external parameters. Dynamically determining the characteristic curve of a component, in one or more embodiments, can be performed periodically (e.g., every hour, every day, once a week, among other periodic time periods) as observed values of the one more external parameters are measured and/or reported.

These embodiments are described in sufficient detail to enable those of ordinary skill in the art to practice one or more embodiments of this disclosure. It is to be understood that other embodiments may be utilized and that process, electrical, and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure, and should not be taken in a limiting sense.

The figures herein follow a numbering convention in which the first digit or digits correspond to the drawing figure number and the remaining digits identify an element or component in the drawing. Similar elements or components between different figures may be identified by the use of similar digits.

As used herein, "a" or "a number of" something can refer to one or more such things. For example, "a number of objects" can refer to one or more objects. Additionally, the designator "N" and "P", as used herein, particularly with respect to reference numerals in the drawings, indicate that a number of the particular feature so designated can be included with a number of embodiments of the present disclosure.

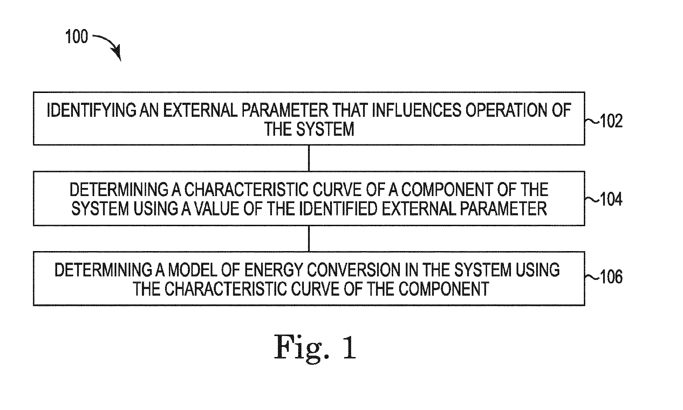

Figure 1 illustrates a method 100 for modeling energy conversion in a system in accordance with one or more embodiments of the present disclosure. The system, as used herein, can include a plurality of interconnected resources (e.g., components). For example, the system can be an energy conversion system, such as a CHP and/or CCHP system, as previously described herein.

An energy conversion model determined using the method 100 can be used to allocate resources (e.g., components of the system) to energy loads (e.g., loads associated with the system) for efficient operation of the system. Energy loads, as used herein, can include realized energy demand from an energy consumer (e.g., external energy consumer). Energy demand, as used herein, can include a numerical value of energy for an energy consumer and/or for a plurality of energy consumers (e.g., energy to be used).

A model, as used herein, can include a number of model parameters estimated (e.g., regression coefficients estimated) and associated with a number of input variables. A model can be identified by identifying a number of model parameters either from data and/or from technology documentation. Model parameters can include discrete parameters (e.g., a model structure) and continuous parameters (e.g., locality of data, robust regression parameters, regularized regression parameters, energy losses, production capacities, and pollutant emission constraints).

For instance, a model can include predictive modeling of variables of a system based on observed past values of the variables. A model can be formed using parameter estimation applied to a model structure and the observed past values of the variables (e.g., measured data).

An energy conversion model can, for example, be used to determine allocation of resources (e.g., components of the system) based on determined (e.g., calculated) characteristic curves for each component of the system. The model can be used to allocate the resources to meet energy demand of energy consumers (e.g., utilities for a building associated with the system). Thereby, an energy conversion model can be used to allocate resources (e.g., energy resources) in a system (e.g., a utility plant) efficiently from energy conversion in the system to energy consumption of an energy consumer (external energy consumer).

At block 102, the method 100 includes identifying an external parameter that influences operation of the system. An external parameter that influences operation of the system, as used herein, can include a parameter that affects operation of one or more components (e.g., equipment, machines, and/or units) of the system. Example external parameters can include outside temperature, inside temperature, weather patterns (e.g., outside temperature, dew point, humidity, sunshine, wind, rainfall, etc.), component inlet water temperature, and/or outlet water temperature, among other parameters.

An effect on operation of a component, as used herein, can include a change in energy consumption, energy conversion, and/or energy conversion capacity as compared to operation of the component without considering the external parameter. Thereby, a parameter can affect energy efficiency and/or energy conversion capacity of a component. Energy conversion capacity of a component can include energy output capability of a component (e.g., energy a component can output).

Energy efficiency, as used herein, can include the change of energy input to energy output (e.g., energy output divided by energy input). In some instances, energy efficiency can be represented by a numerical value. The numerical value can, for example, be from 0 to 1, wherein an energy efficiency of 1 indicates higher energy efficiency than an energy efficiency of 0. Alternatively and/or in addition, the numerical value can include a percentage from 0% to 100%.

Identifying an external parameter can include determining an effect of the external parameter on operation of a component of the system (e.g., effect on energy efficiency and/or energy conversion capacity). The effect can include a determined (e.g., calculated) relationship (e.g., an influence) between the external parameter and operation of a component. In various embodiments, the determination of the relationship can include an approximate influence of the external parameter on energy efficiency and/or energy conversion capacity of a component.

For example, assume nominal energy efficiency of a component is 90% at an outside temperature of 20 degrees Celsius (C). An observed value for an external parameter representing outside temperature may be 30 degrees C. The outside temperature can affect energy efficiency of the component of the system by α (e.g., α can be a numerical value representing the relationship between the outside temperature and energy efficiency of the component). The energy efficiency at this value of the external parameter can be changed (e.g., increased and/or decreased) by α times the temperature increase (e.g., 30 degrees C-20 degrees C).

In some embodiments of the present disclosure, historical data can be used to identify an external parameter and/or determine a relationship between the external parameter and operation of the system. Historical data, as used herein, can include energy efficiency and/or energy conversion capacity of one or more components of the system and corresponding values of one or more external parameters. For example, historical data for an absorption chiller can include observed values for one or more relevant external parameters over a period of time and observed energy efficiency of the absorption chiller. A relevant external parameter can include an external parameter that influences the energy efficiency and/or energy conversion capacity of the component.

At block 104, the method 100 includes determining a characteristic curve of a component of the system using a value of the identified external parameter. In various examples, the value can be estimated, observed, and/or received (e.g., as further discussed herein). A component of the system can include, for example, an equipment, machine and/or unit of the system. Such equipment, machine and/or units, can, for instance, convert energy (e.g., generate energy using consumed energy). For instance, converted energy can be passed for further conversion and/or exported out of the system to energy consumers.

A characteristic curve of a component, as used herein, can include interpolation of a set of energy efficiency curves of the component. The set of energy efficiency curves can include a plurality of curves that depict the energy efficiency of the component and/or other relevant characteristics of the component under different values of an external parameter. For instance, the plurality of energy efficiency curves can be calculated for a component and the plurality of energy efficiency curves can be interpolated to determine the characteristic curve.

In some instances, determining a characteristic curve can include determining a relationship between the external parameter and operation of the system. The relationship can include an approximate influence of the external parameter on operation of a component of the system. For example, using the characteristic curve and/or set of energy efficiency curves, in various embodiments, an approximate influence (e.g., effect) of an external parameter can be determined. The output of a characteristic curve of a component can include energy efficiency of the component. The output can be determined knowing the function inputs (e.g. energy load and/or energy demand, and value of the external parameter). The relation between the output (e.g., energy efficiency) and inputs (energy load and/or energy demand, and value of external parameter) can be determined using a statistical method applied to historical data.

For instance, if a relation between output and input (e.g., the approximate influence of the external parameter) is known, then the variable (e.g., effect of parameter times the value of the external parameter) in the characteristic curve can be fixed for any value of the external parameter. Using the characteristic curve, energy efficiency of the component for various situations (e.g., values of external parameters) can be determined in a particular time period and can be dynamically reconstructed (e.g., updated) based on an observed value and/or user specified value (e.g., as discussed further herein).

A characteristic curve can, for example, be represented and/or approximated by a polynomial. It can reflect the external parameters in its coefficients, which may be polynomials and/or other functions of the external parameter. As an example, the characteristic curve for the component at a particular time period can be determined by computation of its coefficients from a value (e.g., estimated and/or observed) of the external parameter.

At block 106, the method 100 includes determining a model of energy conversion in the system using the characteristic curve of the component.

In some embodiments, the model can be determined using a plurality of characteristic curves including the characteristic curve of the component and/or a description of an interconnection of a plurality of resources (e.g., components). Each of the plurality of characteristic curves can be associated with a different component among a plurality of components of the system. Determining the model of energy conversion in the system (e.g., energy conversion model) can include predicting an operating cost of the system, for instance.

In some embodiments, the energy conversion model can be used to select resources (e.g. components) to activate and/or use to meet an energy demand (e.g. energy demand of energy consumers). For instance, the model can be used to calculate behavior of the system (e.g., energy conversion) to meet a particular energy demand in a particular environment

(e.g., external parameters). Thereby, allocating resource can include determining resources to activate (e.g., switch on) and/or not activate (e.g., switch off). For instance, the energy conversion model can be used to allocate resources based on an identified energy cost (e.g., input supply cost) for one or more supply sources and an identified energy demand (e.g., as discussed further herein).

The allocation of resources using the energy conversion model can include a best solution of resource allocation among a set of alternative resource allocation solutions. The system can include a plurality of interconnected components (e.g., resources). The components can be, for instance, connected as a network with a plurality of connections and/or alternative energy pathways. Energy pathways can include possible paths (e.g., paths from a first component to a second component) of energy in the system from input into the system to output to energy consumers. The best solution of resource allocation can be a solution that has the lowest operating cost that can meet the predicted energy demand as compared to the remaining set of alternative solutions.

Operating cost, as used herein, can include a cost to convert energy using the system (e.g., fixed costs and energy supply cost to convert energy). Fixed costs may not be dependent on energy pathways and/or energy efficiency. For instance, a fixed cost for a component can include a constant cost that disregards the energy conversion of a component (e.g., disregards heat output of a boiler) and depends on the status of a component (e.g., activated or not activated). When a component is not activated, the fixed cost may be zero (e.g., fixed cost may not be considered). The operating cost of the system can be affected by supply costs (e.g., energy prices) and/or efficiency of components. Alternatively and/or in addition, an ability to meet energy demand using a resource allocation solution can be influenced by energy conversion capacity of components.

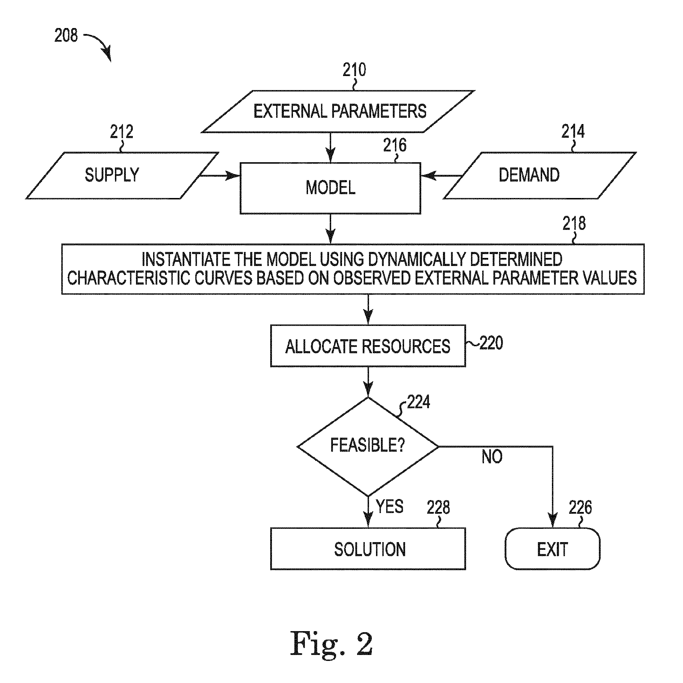

Figure 2 illustrates a block diagram 208 for allocating resources using a model of energy conversion in a system in accordance with one or more embodiments of the present disclosure.

Modeling energy conversion in a system can include receiving historical data associated with one or more external parameters, at block 210. For example, the historical data can include data containing observed values for one or more external parameters as well as observed energy efficiency of one or more components. As an example, the historical data can include observed temperature and/or weather patterns. The historical data can be used to identify the one or more external parameters and the relationship between the parameters and operation of the system. For instance, the relationship can include an approximate influence (e.g., effect) of the one or more external parameters on the observed energy efficiency and/or energy conversion capacity of one or more components of the system, for instance. The historical data can be used, for instance, for determining approximated characteristic curves (e.g., as described further herein).

Although the present embodiment illustrates determining approximated characteristic curves of one or more components using historical data, embodiments in accordance with the present disclosure are not so limited. Approximated characteristic curves can be determined, in one or more embodiments, from technical documentations and/or deriving the approximate influence (e.g., effect) of the external parameter by physical analysis, among other approaches.

At block 212, input supply data can be received. The input supply data can include data identifying an energy cost for energy supply associated with the system. For instance, the data can include identification of energy supply sources for one or more components of the system (e.g., supply sources that can supply energy to operate the one or more components). Input supply data can include a cost of the input energy from an energy supply source, energy suppliers capacities, availability of different energy sources, and/or energy import fixed profiles (e.g., photovoltaic generation available), among other data. The input supply data can, for example, be used to predict energy cost of the system for a time period. The predicted energy cost can be used to determine a predicted operating cost of using the system. For example, supply can include electricity, water, and/or manual labor, among other energy supply material.

At block 214, output demand data can be received. The output demand data can include data associated with output demand (e.g., energy demand). The data associated with output demand can include data identifying past and/or present energy demand of energy consumers (e.g., external energy consumers). The historical data can be located in and/or received from a separate database. The data associated with output demand can include an identification and/or prediction of energy demand for a time period. In some embodiments, the data associated with output demand can include an identification of types of energy in demand at a time period (as discussed further herein).

At block 216, an energy conversion model of a system can be determined and/or identified. The energy conversion model of the system can include a generic energy conversion model of the system. A generic energy conversion model of the system can include identification of components of the system, the interconnection of the components of the system (e.g., energy pathways), and/or approximated characteristic curves of each component (e.g., general form of the characteristic curves).

An approximated characteristic curve of a component, as used herein, can include a set of energy efficiency curves (e.g., a plurality of curves) for a component and/or a characteristic curve with an approximate influence of an external parameter (e.g., contains the built in ability to determine a single characteristic curve for a given value of the external parameter). An approximate influence, as used herein, can include a determined relationship between the external parameter and operation of the system. The set of curves for a component can each be for a different value of the external parameter. Using the set of curves for the component, an approximate influence of the external parameter can be determined.

The approximated characteristic curve of the component can be stored and/or saved that includes the approximate influence of the external parameter. A characteristic curve (e.g., the approximated characteristic curve) for each component of the system can be determined based on a set of curves depicting energy efficiency of each component using equipment profile data for each component. Thereby, the approximated characteristic curves for a plurality of components can include a plurality of sets of curves (e.g., a set of a set of curves).

The energy conversion model can be determined using aggregation of the approximated characteristic curves determined, wherein each approximated characteristic curve is for a component of the system. The energy conversion model can be determined, in some embodiments, based on a description of the interconnection of resources (e.g., components). For instance, the interconnection can include a plurality of components including the component in the system. The components can be connected with multiple energy pathways (e.g., similar to a computing network), wherein each component may be connected to one or more remaining components in the system. Thereby, energy converted in the system from input energy to output energy can follow multiple energy pathways. The energy conversion model can represent the multiple energy pathways and the characteristic curve of each component (e.g. a resource) in the system.

In response to determining the energy conversion model, at block 218, the energy conversion model can be instantiated using dynamically determined characteristic curves based on observed and/or user specified (e.g., pre-specified) values for external parameters (e.g., a value for the external parameter). The observed values can include values of external parameters observed at a time period, for instance. For example, as an observed and/or user specified value for an external parameter changes, the energy conversion model can be dynamically reconstructed (e.g., updated) based on the change in value of the external parameter. The change in value of the external parameter can result in the energy efficiency and/or energy conversion capacity of the component changing. As a result, the selection of components (e.g., resources) in the system to meet energy demand may be revised due to changes in the energy efficiency and/or energy conversion capacity of one or more components.

For instance, the energy conversion model can be instantiated using dynamically determined (e.g., revised) characteristic curves based on observed and/or user specified values for one or more external parameters. The instantiation of the energy conversion model, in various embodiments, can include a reconstruction, update, and/or revision of the energy conversion model. The instantiation of the energy conversion model can allow resources (e.g., components) within the system to be allocated (e.g., selected to be activated and/or inactivated) to meet energy demands of energy consumers (e.g., heat and/or cooling a building).

The allocation of resources can result in an energy output at a lowest operating cost (e.g., as compared to alternative resource allocation solutions) based on energy costs and/or energy efficiency of components (e.g., resources) available for use in near-real time. The dynamic adjustment (e.g., reconstruction, update, and/or revision) of the energy conversion model based on changing observed and/or user specified values of one or more external parameters can assist in selecting a solution to allocate resources that can result in a lower operating cost as compared to not considering external parameters and/or using predicted values for external parameters. The characteristic curve for each component can, in accordance with one or more embodiments of the present disclosure, be dynamically determined in near-real time (e.g., revised).

The energy costs of energy supply can, for instance, affect the operating cost of the system. For instance, the instantiation of the energy conversion model can be based on fixed costs for running the one or more resources (e.g., human resource cost, maintenance cost, and/or auxiliary energy consumption, among other cost), and cost of input energy to operate the system. The cost of operating the system can be based on the solution for resource allocation determined using a model of energy conversion in the system (e.g., as discussed further herein).

In response to determining an energy conversion model and/or instantiating the energy conversion model, at block 220, the resources can be allocated to meet energy demand (e.g., heating and cooling energy demands of energy consumers) using the energy conversion model. Allocating resources can, for instance, include identifying one or more resources (e.g., components) to activate (e.g., switch on) to convert energy to meet energy demand and corresponding operating points in the system.

In some embodiments, an operating cost of the system (e.g., based on a resource allocation solution) can be determined using the energy conversion model and input supply cost (e.g., input at 212). Allocating resources can include identifying select components (e.g., a sub-set of components among the plurality of components) to run (e.g., consume and/or generate energy) to meet an identified energy demand. The selection can include, for instance, identifying one or more energy pathways of the system to convert input energy to output energy. That is, resources can be selectively allocated (e.g., activated) to meet output demand using the energy conversion model. The input supply cost can be used, for instance, to determine the operating cost of the system to convert energy using the determined resource allocation solution based on the energy efficiency of each resource (e.g., component) activated in the solution.

At block 224, a determination can be made as to whether the resource allocation solution identified using the energy conversion model is feasible. In response to determining the resource allocation is not feasible, the process can be complete and/or exit, at block 226. For instance, exiting the process, in various embodiments, can result in determining an alternative resource allocation solution using an energy conversion model to get a feasible result and/or re-determining the energy conversion model to reach a feasible result. Resource allocation may not be feasible in response to identifying a resource (e.g., component) does not have the ability to function and/or function at the identified energy efficiency and/or energy conversion capacity, change in energy supply (e.g., unexpected shortage), change in energy demand, and/or an inaccurate and/or not feasible description of an interconnection of resources, among other reasons.

In some embodiments of the present disclosure, determining the allocation of resources is feasible and/or not feasible can include receiving and/or retrieving updated data. The updated data can include updates in supply data, demand data, and/or consumption rates, among other data.

In response to determining the resource allocation is feasible, at block 228, the solution for resource allocation can be saved (e.g., stored as a solution in a set of alternative resource solutions). For instance, a set of alternative resource solutions that are feasible can be saved. A best solution from the set of alternative solutions can be identified. The best solution, as used herein, can include allocation of resources (e.g., components) using the determined model of energy conversion in the system that can meet energy demand at a lowest operating cost (e.g., highest efficiency at lowest cost) as compared to alternative solutions (e.g., the remaining solutions in the set of alternative resource allocation solutions). The lowest operating cost can be determined, for instance, using an identified energy cost of energy supply (e.g. input).

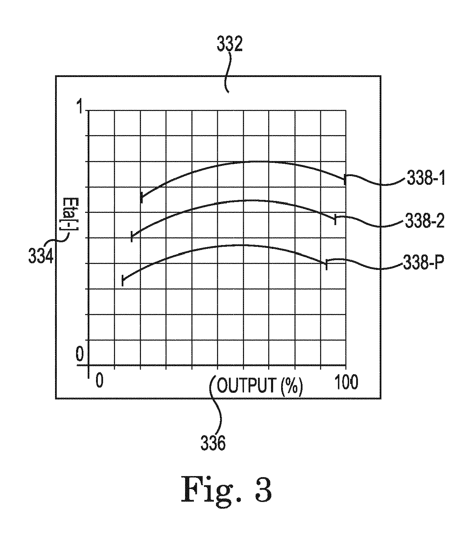

Figure 3 illustrates an example of a set of energy efficiency curves 332 of a component of a system in accordance with one or more embodiments of the present disclosure. The set of energy efficiency curves 332, as illustrated by the embodiment of Figure 3, can be displayed to a user on a user interface. A user can, for example, include technician and/or other person associated with the system. A user interface can include hardware and/or computer-readable instruction components for users to interact with a computing device using text commands and/or images.

The set of energy efficiency curves 332, as illustrated in Figure 3, can include a plurality of energy efficiency curves 338-1, 338-2...338-P. Each energy efficiency curve (e.g., 338-1,..., 338-P) in the set of energy efficiency curves 332 can include a curve that depicts the energy efficiency (e.g. energy output divided by energy input) of a component under a particular value of the external parameter. The set of energy efficiency curves 332 can be displayed as a graph on a user interface. The graph can include a graph that plots the set of energy efficiency curves 332 with energy output 336 of the component on the x-axis and observed energy efficiency 334 on the y-axis for each condition (e.g., each value of the external parameter).

Thereby, the set of energy efficiency curves 332 describe the relation of the energy input and energy output of a component (e.g., consumed energy for the energy output and/or relation of energy consumed and energy produced). This relation is depicted as an energy efficiency curve (e.g., 338-1,...,338-P). Each curve in the set of energy efficiency curves 332 is determined and/or associated with a different value of the external parameter. The set of energy efficiency curves 332 forms a family of curves (e.g., a characteristic of a component). To model energy conversion in a system, an estimated, known, and/or observed value of an external parameter can be used to determine a single characteristic curve using interpolation and/or extrapolation of the set of energy efficiency curves 332 and/or to determine (e.g., calculate) the energy conversion model (e.g., the value can be used to instantiate the model).

In some embodiments, the set of energy efficiency curves 332 and/or the characteristic curve of a component can be determined based on equipment profile data associated with the component. That is, the set of energy efficiency curves 332 and/or the characteristic curve can be contained within the equipment profile data. Equipment profile data can, for instance, include variables of the equipment. For instance, variables of the equipment can include identification of the equipment (e.g., model), input energy use, a set of energy efficiency curves 332, energy conversion capacity (e.g., energy output capacity), ratio between heat and electricity product in CHP and/or CCHP units, fixed cost to operate the equipment, and/or start-up cost of the equipment, among other variables.

The equipment profile data can, in some embodiments, be collected from the component over a period of time, derived from a manufacturer's specification, and/or a combination of both. The collected data can be used to determine the set of energy efficiency curves 332. For instance, the equipment profile data can be collected from the component using a computing device via communication links (e.g., wireless and/or wired communication).

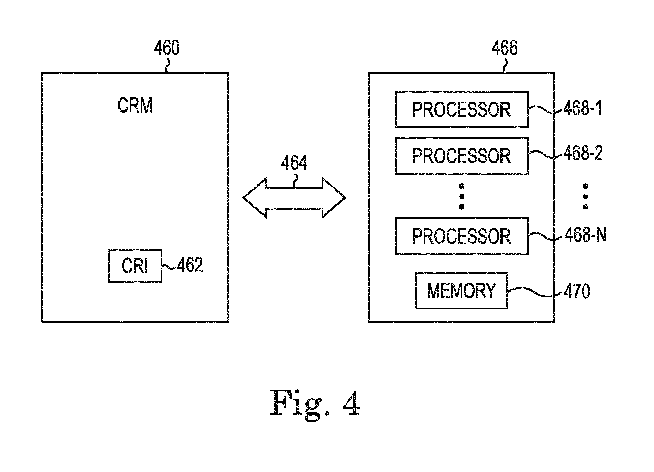

Figure 4 illustrates a block diagram of an example of a system for modeling energy conversion in a system in accordance with one or more embodiments of the present disclosure. As shown in the embodiment of Figure 4, the system includes a computer-readable medium (CRM) 460 in communication with processing resources 468-1, 468-2...468-N.

CRM 460 can be in communication with a device 466 (e.g., a Java^{®} application server, among others) having processing resources 468-1, 468-2...468-N. The device 466 can be in communication with a tangible non-transitory CRM 460 storing a set of computer-readable instructions (CRI) 462 executable by one or more of the processing resources 468-1, 468-2...468-N, as described herein. The CRI 462 can also be stored in remote memory managed by a server and represent an installation package that can be downloaded, installed, and executed. The device 466 can include the memory resource 470, and the processing resources 468-1, 468-2...468-N can be coupled to the memory resource 470.

Processing resources 468-1, 468-2...468-N can execute CRI 462 that can be stored on an internal or external non-transitory CRM 460. The processing resources 468-1, 468-2...468-N can execute CRI 462 to perform various functions. For example, the processing resources 468-1, 468-2...468-N can execute CRI 462 to determine a model of energy conversion in a system. A non-transitory CRM (e.g., CRM 460), as used herein, can include volatile and/or non-volatile memory. Volatile memory can include memory that depends upon power to store information, such as various types of dynamic random access memory (DRAM), among others. Non-volatile memory can include memory that does not depend upon power to store information. Examples of non-volatile memory can include solid state media such as flash memory, electrically erasable programmable read-only memory (EEPROM), phase change random access memory (PCRAM), magnetic memory such as a hard disk, tape drives, floppy disk, and/or tape memory, optical discs, digital versatile discs (DVD), Blu-ray discs (BD), compact discs (CD), and/or a solid state drive (SSD), etc., as well as other types of computer-readable media.

The non-transitory CRM 460 can also include distributed storage media. For example, the CRM 460 can be distributed among various locations.

The non-transitory CRM 460 can be integral, or communicatively coupled, to a computing device, in a wired and/or a wireless manner. For example, the non-transitory CRM 460 can be an internal memory, a portable memory, a portable disk, or a memory associated with another computing resource (e.g., enabling CRIs to be transferred and/or executed across a network such as the Internet).

The CRM 460 can be in communication with the processing resources 468-1, 468-2...468-N via a communication path 464. The communication path 464 can be local or remote to a machine (e.g., a computer) associated with the processing resources 468-1, 468-2...468-N. Examples of a local communication path 464 can include an electronic bus internal to a machine (e.g., a computer) where the CRM 460 is one of volatile, non-volatile, fixed, and/or removable storage medium in communication with the processing resources 468-1, 468-2...468-N via the electronic bus. Examples of such electronic buses can include Industry Standard Architecture (ISA), Peripheral Component Interconnect (PCI), Advanced Technology Attachment (ATA), Small Computer System Interface (SCSI), Universal Serial Bus (USB), among other types of electronic buses and variants thereof.

The communication path 464 can be such that the CRM 460 is remote from the processing resources e.g., 468-1, 468-2...468-N such as in a network relationship between the CRM 460 and the processing resources (e.g., 468-1, 468-2...468-N). That is, the communication path 464 can be a network relationship. Examples of such a network relationship can include a local area network (LAN), wide area network (WAN), personal area network (PAN), and the Internet, among others. In such examples, the CRM 460 can be associated with a first computing device and the processing resources 468-1, 468-2...468-N can be associated with a second computing device (e.g., a Java^{®}server, etc.). For example, a processing resource 468-1, 468-2...468-N can be in communication with a CRM 460, wherein the CRM 460 includes a set of instructions and wherein the processing resource 468-1, 468-2...468-N is designed to carry out the set of instructions to model energy conversion in a system..

The processing resources 468-1, 468-2...468-N coupled to the memory resource 470 can identify (e.g., input) energy demand of energy consumers associated with the system for a time period. Energy demand can include demand for energy from an energy consumer (e.g., external from the system). A time period can, for instance, include a day, a week, and a month, for example. Energy demand can be based on the particular type of output, in some embodiments.

In some embodiments of the present disclosure, past energy demand data (e.g., historical data) can be used to identify the energy demand for a time period (e.g., predefined time period). The identification can include identifying types of energy (e.g., energy output) in demand based on past energy demand data identifying types of energy in demand at one or more previous time periods. For instance, during the winter in a northern region there may be historically higher demand for heat than in the summer.

The processing resources 468-1, 468-2...468-N coupled to the memory resource 470 can identify an energy cost of energy supply for the time period. The energy supply can be associated with the system (e.g., input energy to operate the one or more resources of the system). The energy cost of energy supply (e.g., purchased energy prices) can be identified and/or input based on data. For instance, the data can be from a plurality of supply sources (e.g., public grid and/or natural gas supplier).

The processing resources 468-1, 468-2...468-N coupled to the memory resource 470 can identify an external parameter that influences operation of the system. An external parameter can be identified for each component of a plurality of components of the system and/or for a subset of the plurality of components (e.g., for a subset of components that have a relevant external parameter). A particular external parameter can be relevant to one or more components, for instance.

The external parameter can be identified, for instance, by analyzing the system operation and/or system technology. In various embodiments, a value for the external parameter can be estimated, observed, and/or retrieved. The estimated, observed, and/or retrieved value of the external parameter can be for the time period. For instance, the estimated external parameter can be estimated (e.g., predicted) using data and/or historical data, such as a weather forecast and/or past values for the external parameter. An observed value can include a measurement (e.g., physical measurement) of the external parameter, for example. A retrieved value can, for instance, be retrieved from a historical database (e.g., analyze past situations).

The processing resources 468-1, 468-2...468-N coupled to the memory resource 470 can determine a set of curves depicting energy efficiency of a component using equipment profile data for the component and a set of known values for the external parameter. A set of curves can be determined for each of the plurality of components, for instance. The set of known values for the external parameter and the equipment profile data can, for instance, be located in and/or retrieved from historical data.

The processing resources 468-1, 468-2...468-N coupled to the memory resource 470 can determine a relationship between the external parameter and operation of the component using the set of curves. For instance, the relationship can include an approximate influence of the external parameter (e.g., the value of the external parameter) on the energy efficiency and/or energy conversion capacity of the component. A relationship between an external parameter can be determined, for instance, for each component of a plurality of components of the system and/or for a subset of the plurality of components (e.g., for a subset of components that have a relevant external parameter).

The processing resources 468-1, 468-2...468-N coupled to the memory resource 470 can determine a characteristic curve of the component based on a set value of the external parameter for the time period and the determined relationship. The set value can, for example, include a user specified value (e.g., estimated, observed, and/or retrieved). For instance, the characteristic curve can be determined based on an estimated, observed, and/or retrieved value for the external parameter. A characteristic curve can, for example, be determined for each component of a plurality of components of the system.

The processing resources 468-1, 468-2...468-N coupled to the memory resource 470 can determine a model of energy conversion in the system using the characteristic curve of each of the plurality of components, and a description of an interconnection of the plurality of components. The interconnection of the plurality of components can, in various embodiments, include one or more energy pathways of the system. For instance, the energy pathways can include operating points of the resources of the system (e.g., such as boilers and chillers). The operating points can include energy output by the operating points (e.g., energy output of one or more resources).

The processing resources 468-1, 468-2...468-N coupled to the memory resource 470 can allocate resources, including the plurality of components, to meet the identified energy demand using the model of energy conversion (e.g., energy conversion model) and the identified energy cost of energy supply. For instance, the allocation can include a selective allocation of a sub-set the plurality of components.

As an example, an energy conversion model can be determined. The determined energy conversion model can include a plurality of approximated characteristic curves aggregated based on a description of the interconnection of the plurality of components in the system. Using the identified energy demand, energy cost of energy supply, and a set value for one or more external parameters, the energy conversion model can be instantiated to allocate resources to meet the energy demand. The allocation of resources can include identification of resources to be activated (e.g., switched on) and not activated (e.g., switched off) to meet the energy demand. The resource allocation using the instantiated energy conversion model can, for instance, include a determination of an energy pathway (e.g., flow of energy input to energy out) including identification of input energy (e.g., type of energy and amount) to operate the system.

In some embodiments of the present disclosure, energy cost of energy supply and energy efficiency of components of the system (e.g., characteristic curve) can be used to determine an operating cost of the system. The operating cost of the system can include a cost to operate (e.g., run) the system to meet the energy demand. For example, the operating cost can be determined based on an identified input energy (e.g., type and amount of energy) to operate the system and energy cost. The operating cost can, for instance, be used to determine the resource allocation solution by identifying a sub-set of the plurality of components of the system to operate to meet energy demand at the lowest operating cost compared to an alternative set of resource allocation solutions.

In accordance with some embodiments of the present disclosure, the processing resources 468-1, 468-2...468-N coupled to the memory resource 470 can reconstruct the model of energy conversion in the system using observed and/or user specified values for the external influence parameter over time (e.g., the time period and/or multiple time periods). The reconstruction can include reconstructing the model of energy conversion (e.g., energy conversion model) in near-real time (e.g., dynamically reconstruct).

For instance, reconstruction of the energy conversion model can include a revision of one or more characteristic curves of components. The characteristic curves can be revised using one or more observed values for one or more external parameters. The external parameters can be periodically observed (e.g., ten minutes, thirty minutes, and hour) and/or constantly observed, in some embodiments of the present disclosure. The revised one or more characteristic curves can be used to reconstruct the model of energy conversion in the system.

As used herein, "logic" is an alternative or additional processing resource to execute the actions and/or functions, etc., described herein, which includes hardware (e.g., various forms of transistor logic, application specific integrated circuits (ASICs), etc.), as opposed to computer executable instructions (e.g., software, firmware, etc.) stored in memory and executable by a processor.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A computer implemented method (100) for modeling energy conversion in a system including;
identifying an external parameter that influences operation of the system (102);
determining a characteristic curve of a component of the system using a value of the identified external parameter (104); and
determining a model of energy conversion in the system using the characteristic curve of the component (106).

2. The computer implemented method (100) of claim 1, wherein determining the model of energy conversion in the system includes predicting an operating cost of the system.

3. The computer-implemented method (100) of claim 1, wherein the method includes determining the characteristic curve of the component based on equipment profile data associated with the component.

4. The computer-implemented method (100) of claim 1, wherein determining the characteristic curve of the component includes:
calculating a plurality of energy efficiency curves of the component; and
interpolating the plurality of energy efficiency curves of the component.

5. The computer-implemented method (100) of 1, wherein the method includes reconstructing the model of energy conversion in the system using an observed value of the external parameter.

6. The computer-implemented method (1000 of claim 1, wherein identifying the external parameter includes calculating a relationship between the external parameter and operation of the component.

7. The computer-implemented method (100) of claim 6, wherein calculating the relationship includes calculating at least one of an effect of the external parameter on energy efficiency of the component and an effect of the external parameter on energy conversion capacity of the component.

8. The computer-implemented method (100) of claim 1, wherein determining the characteristic curve includes determining a relationship between the external parameter and operation of the system.

9. The computer-implemented method (100) of claim 1, including allocating resources using the model of energy conversion to meet an identified energy demand.

10. The computer-implemented method (100) of claim 9, wherein allocating the resources using the model of energy conversion includes determining the allocation of resources has a lowest operating cost to meet the identified energy demand as compared to an alternative set of resource allocation solutions.
